# EUROPÄISCHE PATENTSCHRIFT

(11) **EP 3 414 114 B1**
(45) Veröffentlichungstag und Bekanntmachung des Hinweises auf die Patenterteilung: **26.06.2019**
(21) Anmeldenummer: 17704203.3
(22) Anmeldetag: 06.02.2017
(51) Int. Cl.: B60G 9/00, B60G 11/113, B60G 7/00, B60G 11/46, B60B 35/04

(54) **ACHSEINHEIT**
AXLE UNIT
ENSEMBLE ESSIEU

(30) Priorität: 08.02.2016 DE 102016102133
(43) Veröffentlichungstag der Anmeldung: 19.12.2018
(73) Patentinhaber: SAF-HOLLAND GmbH, 63856 Bessenbach (DE)
(72) Erfinder: NAGEL, Christopher, 63762 Großostheim (DE)
(74) Vertreter: Müller Schupfner & Partner Patent- und Rechtsanwaltspartnerschaft mbB
(86) Internationale Anmeldenummer: PCT/EP2017/052530
(87) Internationale Veröffentlichungsnummer: WO 2017/137349

(56) Entgegenhaltungen:
- EP-A1- 2 808 187
- WO-A1-2005/025900
- WO-A1-2013/072192
- WO-A1-2013/164139
- WO-A1-2014/142656
- US-A1- 2006 237 940

## Beschreibung

Die vorliegende Erfindung betrifft eine Achseinheit, insbesondere ein Befestigungssystem zur Festlegung eines Längslenkers an einem Achsrohr.

Achseinheiten sind aus dem Stand der Technik bekannt, insbesondere die Festlegung von Achslenkern an Achsrohren. Dabei haben sich verschiedene Befestigungsmechanismen etabliert. So wird zum einen ein kraftschlüssiger Verbund aus Längslenker und Achsrohr hergestellt, indem beispielsweise U-Bügel, welche an ihren Enden jeweils mit Gewinden ausgestattet sind, eine Verklemmung des Achsrohrs gegenüber dem Lenker erreichen. Der Nachteil dieser U-Bügel ist eine Vielzahl von weiteren Bauteilen, die erforderlich sind, um einen ausreichend stabilen Sitz des Längslenkers an dem Achsrohr zu erreichen und gleichzeitig eine Verdrehung des Achsrohrs weitestgehend zu verhindern. Zum anderen hat es sich bisher bewährt, das Achsrohr mit dem Längslenker zu verschweißen, wobei eine Vielzahl von möglichen Schweißnahtformen zum Einsatz gelangen kann, um eine stoffschlüssige Verbindung zwischen dem Achsrohr und dem Längslenker herzustellen. Der Nachteil einer stoffschlüssigen Verbindung ist, dass diese nicht ohne weitergehende Zerstörung des Materials des Lenkers oder des Achsrohrs getrennt werden kann und dass während des Schweißvorgangs eine Veränderung des Materialgefüges am Längslenker und am Achsrohr im Bereich der Schweißzone stattfindet, wobei insbesondere die Sprödbruchneigung steigt und innermaterielle Verspannungen auftreten können, die eine Rissbildung in der Schweißzone begünstigen.

Die WO 2013/164139 betrifft eine Achsanbindung, welche ein Lenkerelement und ein Spannelement umfasst, wobei ein Befestigungselement vorgesehen ist, welches das Lenkerelement und das Spannelement gegeneinander zwingt, um einen Achskörper kraftschlüssig an der Achsanbindung festzulegen.

Die US 2006/0237940 betrifft einen Klemmmechanismus zum Festlegen einer Achse an einem Aufhängungselement.

Die WO 2005/025900 A1 betrifft eine Aufhängung, welche geschweißte Verbindungen zwischen dem Achslenker und der Achse eliminiert.

Aufgabe der vorliegenden Erfindung ist es, eine Achseinheit, insbesondere zur Festlegung eines Achsrohrs an einem Lenkerelement, bereitzustellen, welche die Nachteile des Stands der Technik behebt und insbesondere einfach zu montieren ist, nur eine geringe Anzahl von Bauteilen aufweist und eine sichere Verbindung des Achsrohrs an dem Lenker ermöglicht.

Diese Aufgabe wird gelöst mit einer Achseinheit mit den Merkmalen von Anspruch 1. Weitere Vorteile und Merkmale der vorliegenden Erfindung ergeben sich aus den abhängigen Ansprüchen.

Erfindungsgemäß umfasst die Achseinheit einen Lenker und eine Klemmeinheit, wobei der Lenker und die Klemmeinheit einen Rohrbereich umfassen bzw. umschließen, wobei eine erste Seite des Lenkers vom Rohrbereich abgewandt ist und eine zweite Seite eines Lenkers eine lenkerseitige Begrenzungsfläche des Rohrbereichs umfasst oder bildet, wobei die Klemmeinheit an der ersten Seite des Lenkers sich abstützend zur Anlage bringbar ist und eine klemmseitige Begrenzungsfläche aufweist, die den Rohrbereich begrenzt, wobei die Klemmeinheit ein erstes Klemmteil und ein zweites Klemmteil aufweist, wobei das erste Klemmteil einen ersten Keilabschnitt und das zweite Klemmteil einen zweiten Keilabschnitt aufweist, wobei die Keilabschnitte derart ausgebildet sind, dass ein Verlagern bzw. eine Verlagerung der Klemmteile im Wesentlichen parallel zu einer Klemmachse aufeinander zu in einer Verengung des Rohrbereichs quer zur Klemmachse resultiert. Der Lenker der Achseinheit ist vorzugsweise ein an seinem ersten distalen Ende schwenkbar am Rahmen eines Nutzfahrzeugs festlegbares Bauteil, das sich in einer quer zur Schwenkachse seiner Aufhängung verlaufenden Richtung länglich erstreckt und an seinem der schwenkbaren Aufhängung gegenüberliegendem distalen Ende einen Festlegungsbereich für ein Federelement, vorzugsweise eine Luftfeder, aufweist. Weiterhin weist der Lenker eine erste Seite auf, vorzugsweise die Oberseite, und einen der ersten Seite gegenüberliegende zweite Seite, welche eine lenkerseitige Begrenzungsfläche des Rohrbereichs aufweist und zweckmäßigerweise im Einbauzustand der Fahrbahn zugewandt ist. Im Rohrbereich ist vorzugsweise ein Achsrohr oder ein Achsstummelelement im Wesentlichen parallel zur Schwenkrichtung des Lenkers an dem Lenkerelement anordenbar und über die Klemmeinheit an dem Lenker festgelegt oder festlegbar. Besonders bevorzugt ist es, dass der Querschnitt des Lenkers im Bereich der lenkerseitigen Begrenzungsfläche längs bzw. parallel zur Schwenkachse konstant ist oder sich nur sehr unwesentlich ändert. Die Klemmeinheit ist insbesondere für den Einsatz mit einem Längslenker geeignet, da die aufzunehmenden Kräfte zur Festlegung eines parallel zur Schwenkrichtung des Lenkers angeordneten Achsrohres von der Klemmeinheit aufgebracht werden können. In einer ersten bevorzugten Ausführungsform kann der Rohrbereich, welcher durch die Klemmeinheit und den Lenker gebildet ist, eine vorzugsweise zylinderförmige Fläche sein. Alternativ hierzu kann zur Festlegung eines im Wesentlichen rechteckigen oder quadratischen und mit gerundeten Ecken ausgeführten Achsrohrs die entsprechende Geometrie des Rohrbereichs auch polygonal mit vorzugsweise gerundeten Ecken ausgebildet sein. Die Klemmeinheit ist zweiteilig ausgebildet und weist ein erstes Klemmteil und ein zweites Klemmteil auf. Dabei umgreift die Klemmeinheit den Rohrbereich und den Lenker zumindest bereichsweise. Mit anderen Worten ist die Klemmeinheit dazu ausgebildet, sich einerseits an der ersten Seite des Lenkers abzustützen und auf der gegenüberliegenden Seite des Lenkers eine Begrenzung des Rohrbereichs zu bilden. Weiterhin weist die Klemmeinheit zwei Keilabschnitte auf, von denen ein erster Keilabschnitt an dem ersten Klemmteil und ein zweiter Keilabschnitt an dem zweiten Klemmteil vorgesehen ist. Die Keilabschnitte sind vorzugsweise derart ausgebildet, dass eine Verlagerung der Klemmteile parallel zur Klemmachse aufeinander zu dazu führt, dass die Klemmeinheit, insbesondere die den Rohrbereich begrenzende Fläche der Klemmeinheit, in Richtung der ersten Seite des Lenkers verlagert wird und sich dabei der Rohrbereich, quer zur Klemmachse gesehen, verengt. Durch diese Verengung des Rohrbereichs kann ein Achsrohr, welches im Rohrbereich angeordnet ist, kraftschlüssig und reibschlüssig an dem Verbund aus Lenker und Klemmeinheit festgelegt werden. Der große Vorteil der erfindungsgemäßen Achseinheit ist, dass dabei die zur Herstellung des Kraftschlusses aufzubringende Kraft nicht allein auf einer Zugspannung, welche beispielsweise durch U-Bügel oder entsprechende Bolzen hergestellt wird, erreicht wird, sondern über die Klemmabschnitte eine Art Hebelwirkung bzw. im physikalischen Sinne eine geneigte Ebene verwendet werden kann, um mit einer bestimmten Zugkraft, mit welcher die beiden Klemmteile gegeneinander gezwungen werden, eine wesentlich höhere Anpresskraft des Achsrohrs an den Verbund aus Klemmeinheit und Lenker zu erreichen. Auf diese Weise kann verhindert werden, dass dauerhaft und unter periodischen Lastwechseln beanspruchte Zugbolzen eine Materialermüdung, insbesondere durch bleibende plastische Verformung, erleiden und hierdurch die Lebensdauer einer Achsrohrverbindung verringert ist. Mit der Bezeichnung "im Wesentlichen parallel" für die Bewegung der beiden Klemmteile relativ zueinander ist eine gewisse Verschiebung der Klemmteile (gegeneinander) quer zur Klemmrichtung, also quer zur Richtung, entlang derer die beiden Klemmteile gegeneinander gezwungen werden, umfasst. Dies liegt insbesondere darin begründet, dass durch die keilförmigen mit einem lokalen oder mittleren Anstieg versehenen Kontaktflächen der beiden Keilabschnitte immer auch eine Verschiebung der Klemmteile quer zur Klemmrichtung, oder bezogen auf den Lenker quer zur Schwenkrichtung stattfindet. Diese Verlagerungsbewegung ist bei der Bezeichnung "im Wesentlichen parallel zur Klemmachse" miteingerechnet.

Bevorzugt ist es, dass die Keilabschnitte jeweils eine Querschnittsdicke aufweisen, die ausgehend von dem distalen Ende bzw. demjenigen Ende des Keilabschnitts, welches zum jeweils gegenüberliegenden Klemmteil gewandt ist, zunimmt. Die Keilabschnitte weisen vorzugsweise jeweils ein distales Ende auf, mit welchem sie im Wesentlichen vom Klemmteil abstehen. Weiterhin bevorzugt wird das Klemmteil mit dem distalen Ende des Keilabschnitts voran entlang der Klemmachse in Richtung des jeweils gegenüberliegenden Klemmteils verlagert um die Klemmeinheit in Eingriff mit dem Lenker und einem Achsrohr zu bringen. Dabei nimmt die Querschnittsdicke des Keilabschnitts in einer quer zur Klemmachse verlaufenden Richtung vom distalen Ende des Keilabschnitts vorzugsweise bis hin zum einem distalen Ende gegenüberliegenden Bereich des Keilabschnitts zu, der an einem sich quer zur Klemmachse erstreckenden Bereich (z. B. einem später beschriebenen Stegabschnitt) des Klemmteils angrenzt. Dabei ist die erste und einfachste bevorzugte Ausführungsform eine einfache geneigte Ebene. Alternativ bevorzugt können die Keilabschnitte auch jeweils Außenflächen aufweisen, die konische oder kegelförmige Abschnitte umfassen. Besonders bevorzugt ist, dass der Anstieg der Querschnittszunahme der Keilabschnitte im Wesentlichen gleichförmig ist, d.h., dass mit anderen Worten ein linearer Anstieg der Querschnittsdicke vorliegt. Hierdurch kann verhindert werden, dass einzelne Abschnitte der Kontaktflächen der Keilabschnitte stärker belastet und abgenutzt werden als andere.

Besonders bevorzugt ist der mittlere Anstieg der Querschnittsdicke des ersten Keilabschnitts und/oder des zweiten Keilabschnitts längs der oder parallel zur Klemmachse im Bereich von 0,04 bis 0,3, vorzugsweise von 0,06 bis 0,2 und liegt besonders bevorzugt bei circa 0,1 bis 0,2. Es hat sich gezeigt, dass für die Vielzahl von vorgesehenen Anwendungen, für welche die vorliegende Erfindung ausgelegt sein soll, ein Anstiegsbereich von 0,04 bis 0,3 ausreichend ist, um sämtliche der möglichen Geometrien von Achseinheiten zu berücksichtigen. Je steiler dabei der Anstieg ist, desto größer ist die vom Zugelement aufzubringende Kraft, um eine vorgegebene und zumindest erforderliche Befestigungskraft des Achsrohrs an dem Verbund aus Lenker und Klemmeinheit zu erzeugen. Je kleiner der Anstieg ist, desto entsprechend kleiner ist die erforderliche Kraft, aber desto größer ist auch der von den Klemmteilen relativ zueinander zurückzuliegende Weg, was in einem bestimmten zumindest erforderlichen Bauraumbedarf der Klemmteile resultiert, insbesondere bezogen auf die Breite des Lenkers bzw. auf die Erstreckung des Lenkers längs oder parallel zur Klemmachse bzw. längs oder parallel zur Schwenkachse. Der besonders bevorzugte Bereich von 0,6 bis 0,2 schließt dabei zwar eine Reihe von möglichen Einsatzorten der erfindungsgemäßen Achseinheit aus, erreicht aber durch den erhöhten Mindestanstieg, dass ein Lösen der Klemmverbindung nach Entnahme der Zugelemente mit einfachen Handwerkzeugen möglich ist. Gleichzeitig kann bei Verwendung des größten Anstiegs von 0,2 eine große Anzahl verschiedener Achselemente durch die Klemmeinheit an einem Lenker festgelegt werden, da ein größerer Ausgleich von geometrischen Unterschieden möglich ist. Der besonders bevorzugte Bereich vom 0,1 bis 0,2 hat sich dabei insbesondere beim Einsatz von gezogenen Nutzfahrzeugen, wie beispielsweise Anhängern, bewährt, da die dort auf den Verbund aus Lenkerklemmeinheit und Achsrohr wirkenden Kräfte mit einem Anstieg vom 0,1 der Keilabschnitte immer noch ohne weiteres und unter Einsatz herkömmlicher Zugelemente aufgebracht werden können, während verschiedene Achsrohrgeometrien und Fertigungstoleranzen durch die Höchstgrenze des Anstiegs von 0,2 weiterhin in ausreichender Form ausgeglichen werden können.

Besonders bevorzugt ist der Anstieg, oder mit anderen Worten die Zunahme, der Querschnittsdicke des ersten und des zweiten Keilabschnitts gleich. Besonders bevorzugt können dabei der erste und der zweite Keilabschnitt im Wesentlichen, also mit vorzugsweise mehr als 80% ihrer gegenüber liegenden Flächen, vollflächig aufeinander aufliegen, wobei lokale Spannungsspitzen durch Flächenpressung vermieden werden. Weiterhin kann über den gesamten Bereich der Verschiebung des ersten zum zweiten Keilabschnitt eine gleichmäßige Kraftübertragung vom ersten auf den zweiten Keilabschnitt und umgekehrt stattfinden.

Bevorzugt weist das erste Klemmteil eine erste Aussparung und das zweite Klemmteil eine zweite Aussparung auf, wobei die Aussparungen derart ausgebildet und zueinander positionierbar sind, dass ein Zugelement in den Aussparungen einführbar oder eingeführt ist, um die Klemmteile gegeneinander zu verspannen. Insbesondere bevorzugt sind die Aussparungen an den Klemmteilen dabei in unmittelbarer Nähe oder Nachbarschaft zu den Keilabschnitten angeordnet, um beim Zusammenziehen der Klemmteile gegeneinander durch ein Zugelement eine Wirkung größerer Hebelarme im Bereich der Aussparungen und der Keilabschnitte zu vermeiden. Vorzugsweise ist an den jeweils außen liegenden, d.h. vom jeweils gegenüberliegenden Klemmteil abgewandten Flächen oder Seiten der Aussparungen ein verstärkter Abschnitt oder Flansch vorgesehen, an welchem sich ein Zugelement abstützen kann, um große Kräfte auf die Klemmteile zu übertragen.

Besonders bevorzugt sind die Aussparungen dabei derart an den Klemmteilen angeordnet, dass sie in dem Zustand, in dem die Klemmteile gegeneinander verspannt werden, im Wesentlichen zueinander fluchtend ausgerichtet sind. Auf diese Weise können Scherspannungen und Verbiegungen am Zugelement vermieden werden und somit die Lebensdauer der Achseinheit deutlich erhöht werden. Dass die Aussparungen "im Wesentlichen" fluchtend angeordnet werden können, liegt daran, dass beim Verspannvorgang der Klemmteile gegeneinander eine gewisse Querverschiebung quer zur Klemmachse stattfindet und somit auch eine Verschiebung der Aussparungen relativ zueinander im Rahmen der Erfindung vorgesehen sein muss. Daher ist es ganz besonders bevorzugt, dass die Aussparungen besonders in dem Zustand genau zueinander fluchtend ausgerichtet sind, in dem eine ausreichende Verklemmung der Klemmteile gegeneinander erreicht ist und das Achsrohr im Rohrbereich mit einer ausreichenden Anpresskraft kraft- und reibschlüssig an dem Verbund aus Lenker und Klemmeinheit festgelegt ist.

Besonders bevorzugt weist eine der Aussparungen eine größere Querschnittsfläche als die andere Aussparung auf. Dabei dient die größere Querschnittsfläche der Ein- und Aussparung vorzugsweise dazu, die Verschiebung der Klemmteile relativ zueinander quer zur Klemmrichtung ausgleichen zu können, ohne das Zugelement dabei mit einer quer zur Klemmrichtung wirkenden Kraft zu belasten. Besonders bevorzugt ist eine der Aussparungen dabei als Langloch ausgebildet, welches auf einfache Weise eine Verschiebung des Zugelements innerhalb der Aussparung quer zur Klemmrichtung erlaubt.

Weiterhin bevorzugt weist eine der Aussparungen an einem der Klemmteile eine größere Erstreckung längs oder parallel zur Klemmachse auf als die andere, wobei diese Aussparung bevorzugt ein Innengewinde zum Eingriff mit dem Zugelement aufweist. Vorzugsweise kann auf diese Weise eine Mutter zum Verspannen des Zugelements eingespart werden. Mit Vorteil kann dabei das Zugelement mit einer Erstreckung, die zumindest ein Viertel der Erstreckung des Lenkers längs oder parallel zur Klemmachse ist, in ein Innengewinde der Aussparung eines der Klemmteile eingreifen, wobei eine hohe Zugkraft aufbringbar ist.

In einer ferner bevorzugten Ausführungsform sind die einander kontaktierenden Flächen der Keilabschnitte im Wesentlichen ko-planar und zweckmäßigerweise eben ausgebildet. Eine ko-planare und auch eine ebene Ausbildung der einander kontaktierenden Flächen der Keilabschnitte sorgt insbesondere für eine besonders günstige Kraftübertragung zwischen den Keilabschnitten, da eine großflächige Flächenlast vorliegt, welche lokale Spannungsspitzen aufgrund von Hertz'scher Flächenpressung und Kerbwirkung, verhindert.

Alternativ bevorzugt können der erste und der zweite Keilabschnitt an ihren jeweils zueinander gewandten Seiten konisch oder vorzugsweise als Teilflächen eines schiefen Zylinders ausgebildet sein. Im Gegensatz zur ebenen Ausbildung dient die gerundet ausgebildete kontaktierende Fläche des ersten und/oder des zweiten Keilabschnitts einer verbesserten Positionierung der beiden Keilabschnitte zueinander, derart dass auch eine Verschiebung der Keilabschnitte quer zur Klemmrichtung verhindert werden kann. Insbesondere im Zusammenspiel mit einer als Vertiefung oder Mulde ausgebildeten Kontaktfläche mit der ersten Seite des Lenkers kann auf diese Weise die Klemmeinheit besonders sicher und gegen Verschiebung in alle möglichen Richtungen gesichert, an dem Lenker festgelegt werden.

In einer besonders bevorzugten Ausführungsform weist das erste Klemmteil einen dritten Keilabschnitt und das zweite Klemmteil einen vierten Keilabschnitt auf, wobei der dritte und der vierte Keilabschnitt vom ersten und vom zweiten Keilabschnitt vorzugsweise um zumindest die Erstreckung der Begrenzungsfläche beabstandet sind, wobei der erste und der dritte Keilabschnitt über einen ersten Stegabschnitt relativ zueinander gehalten sind und wobei der zweite und der vierte Keilabschnitt über einen zweiten Stegabschnitt relativ zueinander gehalten sind.

Mit Vorteil weist somit jedes der Klemmteile zumindest zwei Keilabschnitte auf, welche jeweils voneinander beabstandet am Lenker in Eingriff bringbar sind. Auf diese Weise kann eine noch stabilere Verbindung der Klemmeinheit mit dem Lenker erreicht werden, um die Klemmeinheit und somit auch das Achsrohr fester am Lenker festzulegen. Der erste und der dritte Keilabschnitt sind dabei vorzugsweise gleichartig ausgebildet. Ebenso sind vorzugsweise auch der zweite und der vierte Keilabschnitt gleichartig ausgebildet. Der Abstand des ersten vom dritten Keilabschnitt und des zweiten vom vierten Keilabschnitt ist dabei vorzugsweise mindestens so groß wie die Erstreckung der Begrenzungsfläche des Lenkers entlang oder parallel einer zwischen erstem/zweiten Keilabschnitt und dritten/vierten Keilabschnitt verlaufenden Geraden. Durch das Vorsehen zweier Bereiche, in denen jeweils zwei Keilabschnitte des ersten und des zweiten Klemmteils miteinander eine Kraft auf die Klemmeinheit erzeugen, wird dabei insbesondere eine Lastverteilung erreicht, welche die auf einen einzelnen Keilabschnitt wirkenden Kräfte reduziert und es somit ermöglicht, die Keilabschnitte leichter und mit geringerer Wandstärke auszulegen.

Mit Vorteil sind der zweite und der vierte Keilabschnitt unmittelbar mit der ersten Seite des Lenkers in Eingriff bringbar, wobei der erste Keilabschnitt mit dem zweiten Keilabschnitt und der dritte Keilabschnitt mit dem vierten Keilabschnitt in Eingriff bringbar sind. Mit anderen Worten ist es also bevorzugt, dass beide Keilabschnitte des zweiten Klemmteils unmittelbar mit der ersten Seite des Lenkers in Eingriff stehen, wobei die beiden Keilabschnitte des ersten Klemmteils die Keilabschnitte des zweiten Klemmteils abstützen und gegen den Lenker pressen. Dabei kann auf besonders günstige Weise die Auslegung der Keilabschnitte entsprechend ihrer Aufgabe gewählt werden, so dass beispielsweise der zweite und der vierte Keilabschnitt eine im Wesentlichen flache und zur Außengeometrie des Lenkers passende Geometrie aufweisen, während der erste und dritte Keilabschnitt eine mit dem zweiten und dem vierten Keilabschnitt korrespondierende Außengeometrie aufweist. Darüber hinaus ist es auf diese Weise möglich, eine bestimmte Einbaurichtung bzw. Einbauorientierung der Klemmeinheit am Lenker vorzusehen, welche von einem Monteur ohne weiteres erkannt und eingehalten werden kann. Es können so beispielsweise der erste und der zweite Keilabschnitt größer dimensioniert werden, um die bei einer Bremsung auftretenden Kräfte, die im Durchschnitt höher sind als die Kräfte bei einer Beschleunigung, besser auffangen zu können.

Weiterhin bevorzugt weisen die Klemmteile jeweils einen Stegabschnitt auf, wobei die Stegabschnitte sich im Wesentlichen quer zu den jeweiligen Keilabschnitten der Klemmteile erstrecken und an einem Keilabschnitt festlegbar oder festgelegt sind. Die Stegabschnitte sind vorzugsweise blechartig ausgebildete Abschnitte, welche mit Vorteil im Bereich der Keilabschnitte materialverstärkte Bereiche aufweisen. Die Stegabschnitte dienen insbesondere der Kraftübertragung von den Keilabschnitten zur jeweils gegenüberliegenden Haltegeometrie der Klemmeinheit, also einem gegenüberliegenden Keilabschnitt oder einer nicht keilförmigen Abstützgeometrie. Dabei sind die Stegabschnitte vorzugsweise derart ausgebildet, dass sie eine im Wesentlichen bogenförmige oder gekrümmte Grundfläche aufweisen, um insbesondere den Rohrabschnitt freizuhalten, und Kräfte der Keilabschnitte auf der Oberseite des Lenkers hin zu den entsprechend gegenüber liegenden Halteabschnitten oder Keilabschnitten des jeweiligen Klemmteils zu übertragen.

Bevorzugt sind die Stegabschnitte einstückig mit dem jeweiligen Keilabschnitt ausgeführt, um zum einen die Anzahl erforderlicher Bauteile zu reduzieren und zum anderen größtmögliche Kräfte zwischen Keilabschnitt und Stegabschnitt übertragen zu können.

Vorteilhafterweise ist der Stegabschnitt der Achseinheit blechartig ausgebildet und über ein Zugelement an zumindest einem Keilabschnitt festlegbar. Für den Fall, dass eine modulartige Bauweise gewünscht oder erforderlich ist, können die Stegabschnitte als von den Keilabschnitten getrennt ausgebildete Bauteile ausgeführt sein, die entsprechend über das Zugelement mit dem jeweiligen Keilabschnitt in kraftübertragende Verbindung gebracht werden. Vorteil der modulhaften Bauweise ist, dass, der höheren Anzahl von Bauteilen zum Trotz, die Fertigungskosten deutlich reduziert werden können, da beispielsweise vereinheitlichte Keilabschnitte mit einer Vielzahl verschieden groß ausgebildeter Stegabschnitte eingesetzt werden können. Hierfür ist der Stegabschnitt insbesondere blechartig ausgebildet und weist eine Aussparung auf, um über ein Zugelement an zumindest einem Keilabschnitt festgelegt zu werden.

Besonders bevorzugt weist das erste Klemmteil einen fünften Keilabschnitt und das zweite Klemmteil einen sechsten Keilabschnitt auf, wobei der fünfte Keilabschnitt oder der sechste Keilabschnitt die klemmseitige Begrenzungsfläche aufweist. Der fünfte und der sechste Keilabschnitt sind vorzugsweise auf der dem Lenker gegenüber liegenden Seite des Rohrbereichs angeordnet und können zusätzlich zu der durch die Verschiebung der ersten vier Keilabschnitte gegeneinander erzeugten Verengung des Rohrbereiches, eine weitere Verengung des Rohrbereichs herbeiführen, um das Achsrohr an dem Lenker festzulegen. Besonders bevorzugt kontaktiert dabei der fünfte oder der sechste Keilabschnitt das Achsrohr unmittelbar und bildet somit mit anderen Worten die klemmseitige Begrenzungsfläche. Die klemmseitige Begrenzungsfläche ist dabei vorzugsweise derart ausgebildet, dass sie sich möglichst vollflächig an das Achsrohr anlegt, ist also entweder abschnittsweise zylinderförmig oder polygonal mit gerundeten Ecken ausgebildet.

Besonders bevorzugt ist es, dass sämtliche Keilabschnitte im Wesentlichen den gleichen Anstieg der Querschnittsdicke bzw. die gleiche Steigung bzw. Neigung aufweisen. Hierdurch werden insbesondere Materialspannungen innerhalb der Klemmteile minimiert, da ein Aufeinanderzubewegen der Klemmteile stets die gleiche Anpressung an allen Keilabschnitten, welche sich entweder oberhalb des Lenkers oder unterhalb des Achsrohrs befinden, erreichen. Insbesondere kann dabei verhindert werden, dass sich beispielsweise der erste und der fünfte Keilabschnitt verschieden stark quer zur Klemmachse verlagern und somit eine Verzerrung im Stegabschnitt des ersten Klemmteils entsteht. Darüber hinaus ist auf diese Weise auch die an den Zugelementen aufzubringende Kraft im Wesentlichen gleich und es kann somit ein optimaler Kompromiss aus einer bestimmten Zugkraft, welche eine ausreichende Lebensdauer des Zugelements erlaubt, und einer erforderlichen hohen Anpressung des Achsrohres an den Lenker vorgesehen werden, welcher für sämtliche Zugelemente im Wesentlichen gleich ist.

Bevorzugt weisen das erste Klemmteil und das zweite Klemmteil jeweils vier Aussparungen auf, welche ausgelegt sind, vier Zugelemente aufzunehmen, wobei die Zugelemente das erste und das zweite Klemmteil gegeneinander zwingen. Insbesondere bevorzugt ist es dabei, dass die Aussparungen jeweils in unmittelbarer Nähe zu den Keilabschnitten vorgesehen sind. Dabei ist es besonders bevorzugt, dass benachbart zum vierten und zum fünften Keilabschnitt jeweils zwei Aussparungen vorgesehen sind. Das Verteilen der Zugkraft, welche von den Zugelementen aufgebracht wird, auf vier Zugelemente bietet den Vorteil, dass die Zugelemente relativ klein dimensioniert werden können und dennoch ihre Lebensdauer ausreichend hoch ist, um eine gute Gesamtlebensdauer der Achseinheit zu erreichen. Gleichzeitig ist aber die Anzahl der insgesamt erforderlichen Bauteile mit den zwei Klemmteilen, vier Zugelementen und dem Lenker immer noch sehr gering und es kann mit geringem Aufwand die Achseinheit gemäß der vorliegenden Erfindung hergestellt und montiert werden.

In einer weiteren bevorzugten Ausführungsform ist der Lenker im Bereich der lenkerseitigen Begrenzungsfläche gekrümmt ausgebildet und weist in dem Bereich, in dem die Klemmeinheit sich am Lenker abstützt, vorzugsweise eine oder mehrere konkave Ausformungen auf. Die Krümmung des Lenkers im Bereich der lenkerseitigen Begrenzungsfläche ist insbesondere dafür vorgesehen, dass das Achsrohr auf besonders materialschonende Weise am Lenker eingeklemmt werden kann. Insbesondere kann durch die gleichmäßige Krümmung des Lenkers eine gleichmäßige Spannungsverteilung erreicht und Kerbwirkung im Material des Lenkers vermieden werden. Besonders bevorzugt weist der Lenker mehrere konkave Ausformungen insbesondere zur Aufnahme jeweils eines Keilabschnitts auf, die als Mulden oder Dellen ausgebildet sind. Hierdurch kann die Klemmeinheit besonders günstig am Lenker in Position gehalten werden und somit auch das Achsrohr mit einer erhöhten Sicherheit im Lenker kraftschlüssig festgelegt werden.

Weitere Vorteile und Merkmale der vorliegenden Erfindung ergeben sich aus der nachfolgenden Beschreibung mit Bezug auf die beigefügten Figuren. Es versteht sich dabei, dass einzelne nur in einer der Figuren gezeigte Merkmale auch in Ausführungsformen anderer Figuren Anwendung finden sollen, sofern dies nicht explizit ausgeschlossen wurde oder sich aufgrund technischer Gegebenheiten verbietet. Es zeigen:
- Figur 1: eine perspektivische Ansicht einer ersten Ausführungsform der erfindungsgemäßen Achseinheit,
- Figur 2: eine Seitenansicht auf die bereits in Figur 1 gezeigte bevorzugte Ausführungsform der Achseinheit,
- Figur 3: die in Figur 2 angedeutete Schnittansicht durch die Schnittebene B-B, und
- Figur 4: die in Figur 2 angedeutete Schnittansicht der Schnittfläche C-C.

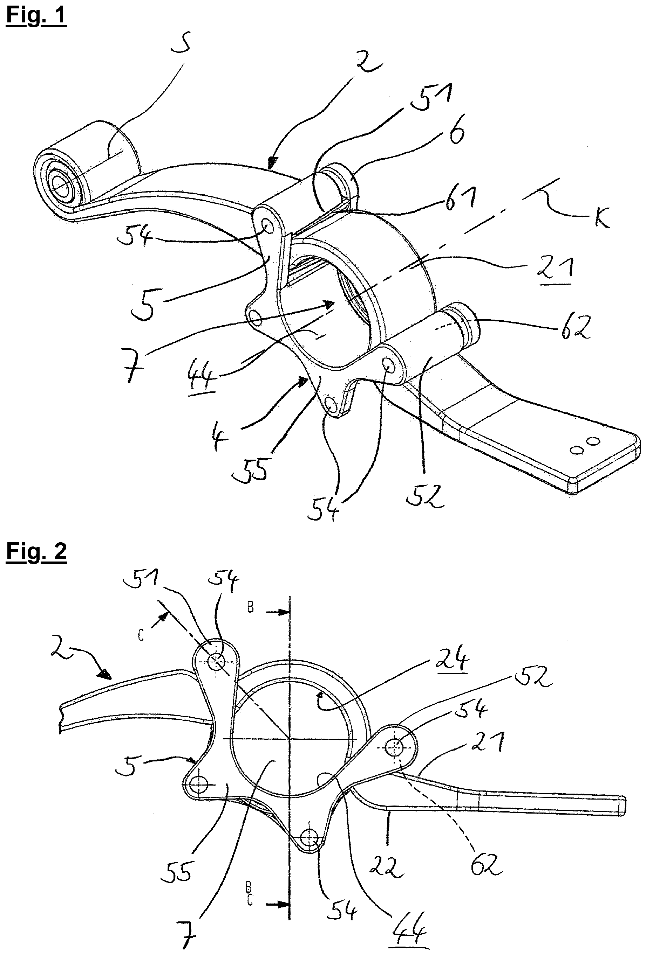

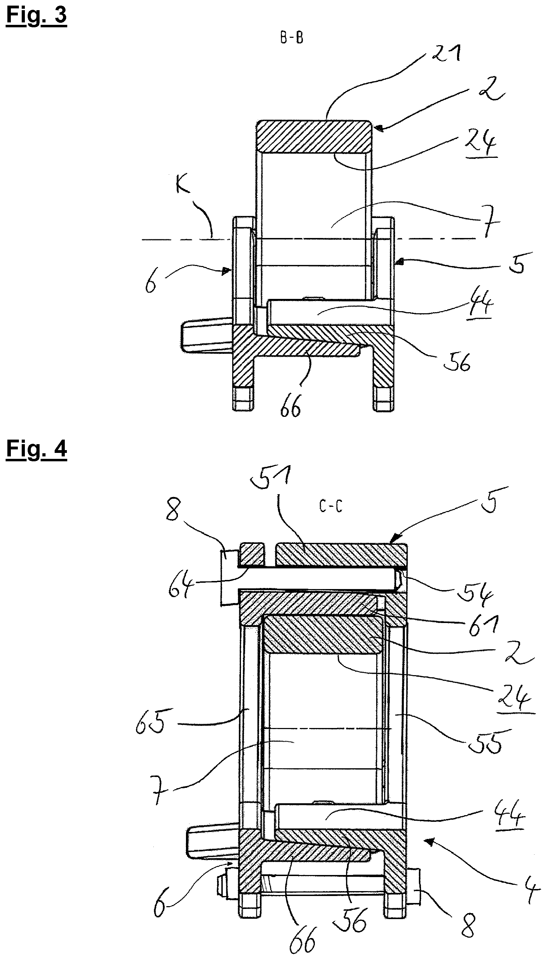

Figur 1 zeigt die bevorzugte Ausführungsform der erfindungsgemäßen Achseinheit in perspektivischer Ansicht. Dabei ist ein Lenker 2 vorgesehen, welcher an seinem in der Figur links gezeigten ersten distalen Ende schwenkbar am Rahmen eines Nutzfahrzeugs festlegbar ist, wobei der Lenker 2 insbesondere schwenkbar um die Schwenkachse S ist. An seinem, dem ersten Ende gegenüberliegenden zweiten distalen Ende weist der Lenker 2 vorzugsweise einen Aufnahme- und Festlegungsbereich für eine Feder, insbesondere eine Luftfeder, auf. Weiterhin hat der Lenker 2 eine erste Seite 21 und eine in der Figur als Unterseite dargestellte zweite Seite 22 (siehe Bezugszeichen in Figur 2). An dem Lenker 2 ist eine Klemmeinheit 4 festlegbar oder festgelegt, wobei in Figur 1 der Zustand gezeigt ist, in der die Klemmeinheit 4 festgelegt ist. Die in diesem Zustand an der Klemmeinheit 4 vorgesehenen Zugelemente 8 sind in dieser Figur nicht gezeigt, sondern sind beispielsweise in Figur 4 dargestellt. Die Klemmeinheit 4 umgreift den Lenker 2 bereichsweise und bildet gemeinsam mit dem Lenker 2 einen Rohrbereich 7. Im Rohrbereich 7 ist vorzugsweise das Achsrohr eines Nutzfahrzeugs anordenbar und über eine kraftschlüssige Verbindung mit dem Lenker 2 und der Klemmeinheit 4 verbindbar bzw. festlegbar. Die Klemmeinheit 4 weist vorzugsweise ein erstes Klemmteil 5 und ein zweites Klemmteil 6 auf, wobei in der vorliegenden Ausführungsform das erste Klemmteil 5 vorzugsweise einen ersten Keilabschnitt 51 und einen dritten Keilabschnitt 52 aufweist. Das zweite Klemmteil 6 weist korrespondierend dazu vorzugsweise einen zweiten Keilabschnitt 61 und einen vierten Keilabschnitt 62 (in der Figur durch den dritten Keilabschnitt 52 verdeckt) auf. Die Keilabschnitte 51, 61 und 52, 62 sind dabei jeweils auf der ersten Seite 21 des Lenkers 2 angeordnet und dienen dazu, die Klemmeinheit 4 derart am Lenker 2 zu verspannen, dass der Rohrbereich 7 verengt werden kann, um ein Achsrohr im Rohrbereich 7 festzuklemmen. In Figur 1 ist weiterhin gezeigt, dass die Klemmeinheit eine klemmseitige Begrenzungsfläche 44 aufweist, welche den Rohrbereich 7 nach unten hin abschließt. Bevorzugt ist die klemmseitige Begrenzungsfläche 44 an einem fünften Keilabschnitt 56 vorgesehen, wie beispielsweise in Figur 4 und Figur 3 gezeigt. Korrespondierend dazu weist das zweite Klemmteil 6 einen sechsten Keilabschnitt 66 auf, welcher den fünften Keilabschnitt 56 in Richtung des Rohrbereichs 7 abstützt. Vorzugsweise weist das erste Klemmteil 5 einen ersten Stegabschnitt 55 auf, welcher zum einen die Keilabschnitte 51, 52 und 56 zueinander positioniert und an diesen festgelegt ist. Zum anderen weist der Stegabschnitt 55 auch Aussparungen auf, die sich im Fall des ersten Keilabschnitts 51 und des dritten Keilabschnitts 52 in die Keilabschnitte 51, 52 hinein erstrecken. In diesen Aussparungen 54 ist insbesondere ein Zugelement 8 einführbar, welches das erste Klemmteil 5 gegen das zweite Klemmteil 6 zwingt.

Figur 2 zeigt eine Seitenansicht der bereits in Figur 1 gezeigten bevorzugten Ausführungsform, wobei insbesondere die lenkerseitige Begrenzungsfläche 24 erkennbar ist und auf die Unterseite bzw. die zweite Seite 22 des Lenkers 2. In Figur 2 ist auch erkennbar, dass der Rohrbereich 7 vorzugsweise eine kreisförmige oder im Wesentlichen kreisförmige Querschnittsfläche aufweist. Dabei weicht lediglich der Übergangsbereich zwischen der lenkerseitigen Begrenzungsfläche 24 und der klemmseitigen Begrenzungsfläche 44 von der Kreisform ab.

Figur 3 zeigt die in Figur 2 dargestellte Schnittansicht entlang der Schnittgeraden B-B. Dabei wird der Lenker 2 ungefähr mittig im Bereich seiner lenkerseitigen Begrenzungsfläche 24 geschnitten, wobei in diesem Bereich die Klemmeinheit 4 nicht in Eingriff mit den Lenker 2 steht. Von der Klemmeinheit 4 ist im unteren Bereich der Figur lediglich der fünfte Keilabschnitt 56 und der sechste Keilabschnitt 66 gezeigt, welche mit Vorteil keilförmig ausgebildet sind und durch eine Verschiebung aufeinander zu entlang der Klemmachse K den Rohrbereich 7 verengen.

Figur 4 zeigt die in Figur 2 gekennzeichnete Schnittansicht entlang der Schnittlinien C-C. Dabei ist zusätzlich zu den Figuren 1 bis 3 das Zugelement 8 gekennzeichnet, welches in Figur 4 in zwei bevorzugten Ausführungsformen dargestellt ist. Das obere Zugelement 8 ist vorzugsweise als einfacher Schraub- oder Gewindebolzen mit einem Kopf ausgebildet, wobei sich der Kopf des Zugelements (in der Figur links) vorzugsweise am Flansch oder Rand der zweiten Aussparung 64 des zweiten Klemmteils 6 abstützt. Die erste Aussparung 54 des ersten Klemmteils 5 ist vorzugsweise mit einem Innengewinde ausgestattet, in welches der Zugbolzen 8 eingreifen kann, um das zweite Klemmteil 6 gegen das erste Klemmteil 5 zu zwingen. Auf diese Weise kann auf eine zusätzliche Mutter zur Festlegung des Zugelements 8 verzichtet werden und die Anzahl der erforderlichen Bauteile ist mit Vorteil möglichst gering. Das in der Figur unten dargestellte zweite bevorzugte Zugelement 8 ist vorzugsweise ebenfalls als Gewindebolzen ausgebildet, wobei dieser jedoch mit einer Mutter (in der Figur links) in Wechselwirkung tritt, um das erste Klemmteil 5 am zweiten Klemmteil 6 festzuklemmen. Diese Ausführungsform ist insbesondere dann bevorzugt, wenn die an dem ersten Klemmteil 5 oder dem zweiten Klemmteil 6 vorhandenen Aussparungen 54, 64 nicht derart lang gewählt werden können, dass ein Innengewinde genug Kraft aufbringen kann, um eine ausreichende Zugspannung zwischen den Klemmteilen 5, 6 zu etablieren. Mit besonderem Vorteil kann weiterhin zusätzlich zu der in Figur 4 gezeigten Mutter eine weitere Mutter zum Kontern oder ein entsprechendes zusätzliches Element zur Verhinderung des Herausdrehens der Mutter von dem Zugelement 8 vorgesehen sein. In Figur 4 ist weiterhin deutlich erkennbar, dass im Bereich des ersten Keilabschnitts 51 und des zweiten Keilabschnitts 61 der zweite Keilabschnitt 61 eine mit der Oberseite bzw. der ersten Seite 21 des Lenkers 2 korrespondierende Oberfläche aufweist und somit insbesondere großflächig eine Druckkraft auf den Lenker 2 ausübt. In diesem Bereich stützt sich die Klemmeinheit 4 am Lenker 2 ab, um insbesondere auf der gegenüberliegenden Seite mit der klemmseitigen Begrenzungsfläche 44 ein in dem Rohrbereich 7 angeordnetes Achsrohr gegen den Lenker 2 pressen zu können. Ein erster Stegabschnitt 55 ist vorgesehen, um die Kraftübertragung zwischen dem ersten Keilabschnitt 51 und dem fünften Keilabschnitt 56 zu gewährleisten. Weiterhin ist ein zweiter Stegabschnitt 65 vorgesehen, welcher die Kraftübertragung zwischen dem zweiten Keilabschnitt 61 und dem sechsten Keilabschnitt 66 gewährleistet. Insbesondere bevorzugt sind sowohl das erste Klemelement 5 als auch das zweite Klemmelement 6 als einstückige Bauteile ausgebildet. Dabei sind zur Vereinfachung der Fertigung das erste Klemmelement 5 und das zweite Klemmelement 6 vorzugsweise mittels eines Gussverfahrens, insbesondere bevorzugt in einem einzigen Herstellungsschritt hergestellt. Auf diese Weise ist eine Achseinheit herstellbar, die mit möglichst wenigen Bauteilen eine besonders starke kraftschlüssige Verbindung eines Achsrohrs an einem Achslenker wie in dem in Figur 4 gezeigten Lenker 2 herstellbar ist.

### Bezugszeichenliste:

- 2 -: Lenker
- 21 -: erste Seite
- 22 -: zweite Seite
- 24 -: lenkerseitige Begrenzungsfläche
- 4 -: Klemmeinheit
- 44 -: klemmseitige Begrenzungsfläche
- 5 -: erstes Klemmteil
- 51 -: erster Keilabschnitt
- 52 -: dritter Keilabschnitt
- 53 -: fünfter Keilabschnitt
- 54 -: erste Aussparung
- 55 -: erster Stegabschnitt
- 56 -: fünfter Keilabschnitt
- 6 -: zweites Klemmteil
- 61 -: zweiter Keilabschnitt
- 62 -: vierter Keilabschnitt
- 63 -: sechster Keilabschnitt
- 64 -: zweite Aussparung
- 65 -: zweiter Stegabschnitt
- 66 -: sechster Keilabschnitt
- 7 -: Rohrbereich
- 8 -: Zugelement
- K -: Klemmachse

## Patentansprüche

1. Achseinheit, insbesondere zum Einsatz in Nutzfahrzeugen, umfassend einen Lenker (2) und eine Klemmeinheit (4),
wobei der Lenker (2) und die Klemmeinheit (4) einen Rohrbereich (7) umschließen,
wobei eine erste Seite (21) des Lenkers (2) vom Rohrbereich (7) abgewandt ist, und eine zweite Seite (22) des Lenkers (2) eine lenkerseitige Begrenzungsfläche (24) des Rohrbereiches (7) bildet,
wobei die Klemmeinheit (4) an der ersten Seite (21) des Lenkers (2) sich abstützend zur Anlage bringbar ist und eine klemmseitige Begrenzungsfläche (44) aufweist, die den Rohrbereich (7) begrenzt,
wobei die Klemmeinheit (4) ein erstes Klemmteil (5) und ein zweites Klemmteil (6) aufweist,
**dadurch gekennzeichnet, dass** das erste Klemmteil (5) einen ersten Keilabschnitt (51) und das zweite Klemmteil (6) einen zweiten Keilabschnitt (61) aufweist,
wobei die Keilabschnitte (51, 61) derart ausgebildet sind, dass eine Verlagerung der Klemmteile (5, 6) im Wesentlichen parallel zu einer Klemmachse (K) aufeinander zu in einer Verengung des Rohrbereiches (7) quer zur Klemmachse (K) resultiert.

2. Achseinheit nach Anspruch 1,
wobei die Keilabschnitte (51, 61) jeweils eine Querschnittsdicke aufweisen, die ausgehend von dem Ende des Keilabschnitts (51, 61), welches zum jeweils gegenüberliegenden Klemmteil (5, 6) gewandt ist, zunimmt.

3. Achseinheit nach Anspruch 2,
wobei der mittlere Anstieg der Querschnittsdicke des ersten Keilabschnitts (51) und/oder des zweiten Keilabschnitts (61) längs der, oder parallel zur Klemmachse (K) im Bereich von 0,04 bis 0,3, vorzugsweise 0,06 bis 0,2 und besonders bevorzugt bei ca. 0,1 bis 0,2 liegt.

4. Achseinheit nach Anspruch 2 oder 3,
wobei der Anstieg der Querschnittsdicke des ersten und des zweiten Keilabschnitts (51, 61) gleich ist.

5. Achseinheit nach einem der vorhergehenden Ansprüche,
wobei das erste Klemmteil (5) eine erste Aussparung (54) und das zweite Klemmteil (6) eine zweite Aussparung (64) aufweist,
wobei die Aussparungen (54, 64) derart ausgebildet und zueinander positionierbar sind, dass ein Zugelement (8) in den Aussparungen (54, 64) einführbar ist, um die Klemmteile (5, 6) gegeneinander zu verspannen.

6. Achseinheit nach Anspruch 5,
wobei eine der Aussparungen (54, 64) eine größere Erstreckung längs oder parallel zur Klemmachse (K) aufweist als die andere,
wobei diese Aussparung (54, 64) bevorzugt ein Innengewinde zum Eingriff mit dem Zugelement (8) aufweist.

7. Achseinheit nach einem der vorhergehenden Ansprüche,
wobei die einander kontaktierenden Flächen der Keilabschnitte (51, 61) im Wesentlichen planar oder eben ausgebildet sind.

8. Achseinheit nach einem der Ansprüche 1 bis 6,
wobei der erste und der zweite Keilabschnitt (51, 61) an ihren jeweils zueinander gewandten Seiten konisch ausgebildet sind.

9. Achseinheit nach einem der vorhergehenden Ansprüche,
wobei das erste Klemmteil (5) einen dritten Keilabschnitt (52) aufweist, wobei das zweite Klemmteil (6) einen vierten Keilabschnitt (62) aufweist, wobei der dritte und der vierte Keilabschnitt (52, 62) vom ersten und zweiten Keilabschnitt (51, 61) vorzugsweise um zumindest die Erstreckung der Begrenzungsfläche (24) beabstandet sind,
wobei der erste und der dritte Keilabschnitt (51, 52) über einen ersten Stegabschnitt (55) gehalten sind, und
wobei der zweite und der vierte Keilabschnitt (61, 62) über einen zweiten Stegabschnitt (65) gehalten sind.

10. Achseinheit nach Anspruch 9,
wobei der zweite und der vierte Keilabschnitt (61, 62) unmittelbar mit der ersten Seite (21) des Lenkers (2) in Eingriff bringbar sind, und
wobei der erste Keilabschnitt (51) mit dem zweiten Keilabschnitt (61) und der dritte Keilabschnitt (52) mit dem vierten Keilabschnitt (62) Eingriff bringbar ist.

11. Achseinheit nach einem der vorhergehenden Ansprüche,
wobei die Klemmteile (5, 6) jeweils einen Stegabschnitt (55, 65) aufweisen,
wobei die Stegabschnitte (55, 65) sich im Wesentlichen quer zu den jeweiligen Keilabschnitten (51, 61) der Klemmteile (5,6) erstrecken und an einem Keilabschnitt (51, 61) festlegbar oder festgelegt sind.

12. Achseinheit nach einem der vorhergehenden Ansprüche,
wobei die Klemmteile (5, 6) einstückig ausgebildet sind,
wobei der jeweilige Stegabschnitt (55, 65) mit dem jeweiligen Keilabschnitt (51, 61) vorzugsweise aus einem Stück hergestellt sind.

13. Achseinheit nach einem der vorhergehenden Ansprüche 9 und 10, wobei das erste Klemmteil (5) einen fünften Keilabschnitt (56) und das zweite Klemmteil (6) einen sechsten Keilabschnitt (66) aufweist,
wobei der fünfte Keilabschnitt (56) oder der sechste Keilabschnitt (66) die klemmseitige Begrenzungsfläche (44) aufweist.

14. Achseinheit nach einem der vorhergehenden Ansprüche,
wobei die Keilabschnitte (51, 52, 56, 61, 62, 66) im Wesentlichen den gleichen Anstieg der Querschnittsdicke aufweisen.

15. Achseinheit nach einem der vorhergehenden Ansprüche,
wobei der Lenker (2) im Bereich der lenkerseitigen Begrenzungsfläche (24) gekrümmt ausgebildet ist und in dem Bereich, in dem die Klemmeinheit (4) sich am Lenker (2) abstützt eine oder mehrere konkave Ausformungen aufweist.

## Claims

1. An axle unit, in particular for use in utility vehicles, comprising a control arm (2) and a clamping unit (4),
wherein the control arm (2) and the clamping unit (4) surround a tube region (7),
wherein a first side (21) of the control arm (2) faces away from the tube region (7), and a second side (22) of the control arm (2) forms a boundary face (24) on the control-arm side of the tube region (7),
wherein the clamping unit (4) can be brought into supporting abutment with the first side (21) of the control arm (2) and has a boundary face (44) on the clamp side, which face limits the tube region (7),
wherein the clamping unit (4) has a first clamping part (5) and a second clamping part (6),
**characterized in that** the first clamping part (5) has a first wedge portion (51), and the second clamping part (6) has a second wedge portion (61), wherein the wedge portions (51, 61) are formed in such a way that a displacement of the clamping parts (5, 6) substantially in parallel with a clamping axis (K) toward one another results in a narrowing of the tube region (7) transversely to the clamping axis (K).

2. The axle unit as claimed in claim 1,
wherein the wedge portions (51, 61) each have a cross-sectional thickness which increases starting from that end of the wedge portion (51, 61) which faces the opposite clamping part (5, 6) in each case.

3. The axle unit as claimed in claim 2,
wherein the average slope in the cross-sectional thickness of the first wedge portion (51) and/or of the second wedge portion (61) along, or in parallel with, the clamping axis (K) is in the range of from 0.04 to 0.3, preferably 0.06 to 0.2, and particularly preferably is approximately 0.1 to 0.2.

4. The axle unit as claimed in either claim 2 or claim 3,
wherein the slope in the cross-sectional thickness of the first and second wedge portions (51, 61) is the same.

5. The axle unit as claimed in any of the preceding claims,
the first clamping part (5) has a first recess (54), and the second clamping part (6) has a second recess (64),
wherein the recesses (54, 64) are formed and can be positioned relative to one another in such a way that a tension element (8) can be introduced into the recesses (54, 64) to brace the clamping parts (5, 6) against one another.

6. The axle unit as claimed in claim 5,
wherein one of the recesses (54, 64) has a greater extent along or in parallel with the clamping axis (K) than the other,
wherein said recess (54, 64) preferably has an internal thread for engaging with the tension element (8).

7. The axle unit as claimed in any of the preceding claims,
wherein those faces of the wedge portions (51, 61) which are in contact with one another are designed to be substantially planar or flat.

8. The axle unit as claimed in any of claims 1 to 6,
wherein the first and second wedge portions (51, 61) are designed to be conical on the sides thereof which face one another in each case.

9. The axle unit as claimed in any of the preceding claims,
wherein the first clamping part (5) comprises a third wedge portion (52),
wherein the second clamping part (6) comprises a fourth wedge portion (62),
wherein the third and fourth wedge portions (52, 62) are at a distance, which is preferably at least equal to the extent of the boundary face (24), from the first and second wedge portions (51, 61),
wherein the first and third wedge portions (51, 52) are held by means of a first web portion (55), and
wherein the second and fourth wedge portions (61, 62) are held by means of a second web portion (65).

10. The axle unit as claimed in claim 9,
wherein the second and fourth wedge portions (61, 62) can be brought into direct engagement with the first side (21) of the control arm (2), and
wherein the first wedge portion (51) can be brought into engagement with the second wedge portion (61), and the third wedge portion (52) can be brought into engagement with the fourth wedge portion (62).

11. The axle unit as claimed in any of the preceding claims,
wherein the clamping parts (5, 6) each comprise a web portion (55, 65),
wherein the web portions (55, 65) extend substantially transversely to the respective wedge portions (51, 61) of the clamping parts (5, 6) and can be or are fixed to a wedge portion (51, 61).

12. The axle unit as claimed in any of the preceding claims,
wherein the clamping parts (5, 6) are designed to be integral,
wherein the respective web portion (55, 65) is preferably produced as a single piece with the respective wedge portion (51, 61).

13. The axle unit as claimed in claims 9 and 10,
wherein the first clamping part (5) has a fifth wedge portion (56), and the second clamping part (6) has a sixth wedge portion (66),
wherein the fifth wedge portion (56) or the sixth wedge portion (66) has the boundary face (44) on the clamp side.

14. The axle unit as claimed in any of the preceding claims,
wherein the wedge portions (51, 52, 56, 61, 62, 66) have substantially the same slope in cross-sectional thickness.

15. The axle unit as claimed in any of the preceding claims,
wherein, in the region of the boundary face (24) on the control-arm side, the control arm (2) is designed to be curved, and in the region in which the clamping unit (4) is supported on the control arm (2), said control arm has one or more concave recesses.

## Revendications

1. Ensemble d'essieu, destiné en particulier à l'utilisation dans des véhicules utilitaires, comportant un bras oscillant (2) et une unité de serrage (4),
dans lequel
le bras oscillant (2) et l'unité de serrage (4) entourent une zone tubulaire (7),
un premier côté (21) du bras oscillant (2) est détourné de la zone tubulaire (7) et un second côté (22) du bras oscillant (2) constitue une surface de délimitation (24) côté bras oscillant de la zone tubulaire (7),
l'unité de serrage (4) est susceptible d'être amenée en appui contre le premier côté (21) du bras oscillant (2) et présente une surface de délimitation (44) côté serrage qui délimite la zone tubulaire (7),
l'unité de serrage (4) comprend une première partie de serrage (5) et une seconde partie de serrage (6),
**caractérisé en ce que**
la première partie de serrage (5) présente une première portion de calage (51) et la seconde partie de serrage (6) présente une seconde portion de calage (61),
les portions de calage (51, 61) étant réalisées de telle sorte qu'un déplacement des parties de serrage (5, 6) l'une vers l'autre sensiblement parallèlement à un axe de serrage (K) résulte en un rétrécissement de la zone tubulaire (7) transversalement à l'axe de serrage (K).

2. Ensemble d'essieu selon la revendication 1,
dans lequel
les portions de calage (51, 61) présentent chacune une épaisseur en section transversale qui augmente à partir de l'extrémité de la portion de calage (51, 61) qui est tournée vers la partie de serrage (5, 6) respective opposée.

3. Ensemble d'essieu selon la revendication 2,
dans lequel
l'augmentation moyenne de l'épaisseur en section transversale de la première portion de calage (51) et/ou de la seconde portion de calage (61) le long de l'axe de serrage (K) ou parallèlement à celui-ci est dans la plage de 0,04 à 0,3, de préférence de 0,06 à 0,2 et de manière particulièrement préférée d'environ 0,1 à 0,2.

4. Ensemble d'essieu selon la revendication 2 ou 3,
dans lequel
l'augmentation de l'épaisseur en section transversale de la première et de la seconde portion de calage (51, 61) est égale.

5. Ensemble d'essieu selon l'une des revendications précédentes,
dans lequel
la première partie de serrage (5) présente une première échancrure (54) et la seconde partie de serrage (6) présente une seconde échancrure (64), les échancrures (54, 64) étant réalisées et susceptibles d'être positionnées l'une par rapport à l'autre de telle sorte qu'un élément de traction (8) peut être introduit dans les échancrures (54, 64) pour serrer les parties de serrage (5, 6) l'une contre l'autre.

6. Ensemble d'essieu selon la revendication 5,
dans lequel
l'une des échancrures (54, 64) présente une extension plus longue que l'autre le long de l'axe de serrage (K) ou parallèlement à celui-ci,
cette échancrure (54, 64) présentant de préférence un taraudage pour venir en engagement avec l'élément de traction (8).

7. Ensemble d'essieu selon l'une des revendications précédentes,
dans lequel
les surfaces mutuellement en contact des portions de calage (51, 61) sont réalisées sensiblement planaires ou planes.

8. Ensemble d'essieu selon l'une des revendications 1 à 6,
dans lequel
la première et la seconde portion de calage (51, 61) sont réalisées chacune de façon conique sur leurs côtés respectifs tournés l'un vers l'autre.

9. Ensemble d'essieu selon l'une des revendications précédentes,
dans lequel
la première partie de serrage (5) comprend une troisième portion de calage (52),
la seconde partie de serrage (6) comprend une quatrième portion de calage (62),
la troisième et la quatrième portion de calage (52, 62) sont écartées de la première et de la seconde portion de calage (51, 61), de préférence au moins à raison de l'extension de la surface de délimitation (24),
la première et la troisième portion de calage (51, 52) sont retenues par une première portion d'âme (55), et
la seconde et la quatrième portion de calage (61, 62) sont retenues par une seconde portion d'âme (65).

10. Ensemble d'essieu selon la revendication 9,
dans lequel
la seconde et la quatrième portion de calage (61, 62) sont susceptibles d'être amenées en engagement directement avec le premier côté (21) du bras oscillant (2), et
la première portion de calage (51) est susceptible d'être amenée en engagement avec la seconde portion de calage (61), et la troisième portion de calage (52) est susceptible d'être amenée en engagement avec la quatrième portion de calage (62).

11. Ensemble d'essieu selon l'une des revendications précédentes,
dans lequel
les parties de serrage (5, 6) comprennent chacune une portion d'âme (55, 65), et
les portions d'âme (55, 65) s'étendent sensiblement transversalement aux portions de calage respectives (51, 61) des parties de serrage (5, 6) et sont immobilisées ou susceptibles d'être immobilisées sur une portion de calage (51, 61).

12. Ensemble d'essieu selon l'une des revendications précédentes,
dans lequel
les parties de serrage (5, 6) sont réalisées d'un seul tenant, et
la portion d'âme respective (55, 65) est réalisée de préférence d'un seul tenant avec la portion de calage respective (51, 61).

13. Ensemble d'essieu selon l'une des revendications précédentes 9 et 10, dans lequel
la première partie de serrage (5) comprend une cinquième portion de calage (56), et la seconde partie de serrage (6) comprend une sixième portion de calage (66), et
la cinquième portion de calage (56) ou la sixième portion de calage (66) présente la surface de délimitation (44) côté serrage.

14. Ensemble d'essieu selon l'une des revendications précédentes,
dans lequel
les portions de calage (51, 52, 56, 61, 62, 66) présentent sensiblement la même augmentation de l'épaisseur en section transversale.

15. Ensemble d'essieu selon l'une des revendications précédentes,
dans lequel
le bras oscillant (2) est réalisé de façon incurvée dans la zone de la surface de délimitation (24) côté bras oscillant et présente une ou plusieurs conformations concaves dans la zone dans laquelle l'unité de serrage (4) s'appuie contre le bras oscillant (2).
